# FASCICULE DE BREVET EUROPEEN

(11) **EP 1 466 516 B1**
(45) Date de publication et mention de la délivrance du brevet: **28.08.2013**
(21) Numéro de dépôt: 04360035.2
(22) Date de dépôt: 06.04.2004
(51) Int. Cl.: A01B 73/04, A01B 63/10

(54) **Machine agricole comportant au moins une roue**
Landwirtschaftliche Maschine mit zumindest einem Rad
Agricultural machine with at least one wheel

(30) Priorité: 07.04.2003 FR 0304280
(43) Date de publication de la demande: 13.10.2004
(73) Titulaire: KUHN S.A., 67706 Saverne Cedex (FR)
(72) Inventeur: Kirch, Michel, 67260 Keskastel (FR)

(56) Documents cités:
- DE-A- 3 033 848
- DE-A- 3 605 975
- US-A- 5 577 563
- US-A1- 2001 045 294
- US-B1- 6 345 490

## Description

La présente invention se rapporte au domaine technique général des machines agricoles. Une autre machine agricole est aussi connue par le document (p. ex. US-A-5577563). De telles machines sont généralement montées sur un tracteur et comprennent par exemple des unités de travail animées ou statiques. Il est connu de réaliser une machine agricole comprenant :
- un cadre destiné à être accroché à un tracteur au moyen d'un système d'attelage trois points comportant deux points d'attelage inférieurs et un point d'attelage supérieur ;
- au moins deux châssis reliés audit cadre de manière repliable autour d'une première articulation respective ;
- au moins une unité de travail montée sur chacun desdits châssis.

Une telle machine agricole est connue par le document EP 0 513 939. Cette machine connue est une machine agricole combinée pour le travail du sol et le semis. Elle permet d'accomplir plusieurs travaux simultanément et en un seul passage, par exemple la préparation du lit de semence et le semis. Elle comporte donc des outils pour la préparation du lit de semence montés sur un châssis et, un dispositif de semis. Ladite machine est attelée à un véhicule tracteur par l'intermédiaire d'un système d'attelage trois points.

La machine connue dispose également d'une largeur de travail très importante pour cultiver et semer des parcelles toujours plus grandes en un minimum de temps. Cette largeur de travail est souvent supérieure à la largeur maximale autorisée pour circuler sur la route. Lors du déplacement de la ferme au champ, il est souvent nécessaire de transporter de telles combinaisons sur la route. Les machines combinées sont ainsi équipées de mécanismes permettant la réduction de l'encombrement en largeur. Cette machine connue est donc une machine combinée de grande largeur. Le déplacement de cette machine combinée de grande largeur sur la voirie entraîne une surcharge sur le tracteur. En effet, les pneus arrière du tracteur sont très écrasés entraînant une instabilité lors du transport de cette machine combinée. Les unités de travail de la machine repliées vers le haut pour le transport augmentent aussi le ballottement de ladite machine au transport.

L'objet de la présente invention est de remédier aux inconvénients de la machine agricole connue tout en veillant à obtenir une réalisation simple, fiable et peu chère. La machine agricole doit permettre des déplacements sur les routes avec une meilleure stabilité et sécurité accrue. Ladite machine devra également respecter les réglementations en vigueur pour la circulation sur les routes.

A cet effet, la machine agricole selon la présente invention est caractérisée en ce qu'une structure porteuse supporte au moins une roue et est liée audit cadre via une deuxième articulation, le pivotement de ladite structure porteuse autour de ladite deuxième articulation étant commandé par un premier module hydraulique permettant d'abaisser pour le transport et de dégager du sol la roue pour le travail et qu'au transport ladite machine agricole pivote librement autour d'un troisième axe formé par les deux points d'attelage inférieurs, ledit pivotement étant limité par un deuxième module hydraulique relié audit point d'attelage supérieur.

Ainsi de telles machines agricoles équipées d'au moins une roue allègent la charge du tracteur et respectent les réglementations routières en vigueur, particulièrement l'encombrement en largeur, l'encombrement en hauteur et la charge maximale sur essieux pour le véhicule tracteur.

Selon des caractéristiques supplémentaires de l'invention, la roue n'est pas utilisée au travail ainsi il n'y a pas de traces sur le lit de semence. Lors du travail, la machine agricole peut suivre parfaitement le relief du sol afin d'assurer une profondeur de travail régulière à fimage d'une machine portée. A cet effet, la machine agricole comporte une tête d'attelage pivotante qui est bloquée lors du travail.

Lors du transport par contre, la roue se déplace sur le sol et la tête d'attelage est avantageusement libre pour permettre un pivotement de la structure porteuse vers l'avant ou l'arrière en fonction du relief de la route. Selon une autre caractéristique, la machine agricole est amortie au transport grâce à un vérin et un accumulateur pneumatique.

D'autres caractéristiques et avantages de l'invention ressortiront de la description détaillée figurant ci-après et faite en référence aux dessins annexés donnés à titre d'exemple non limitatif et dans lesquels :
- la **figure 1** représente selon un premier exemple de réalisation d'une machine agricole conforme à la présente invention ;
- la **figure 2** représente selon un deuxième exemple de réalisation une vue de profil d'une machine agricole combinée conforme à l'invention, placée dans une position de travail ;
- la **figure 3** représente une vue de dessus d'une machine agricole combinée de la figure 2, placée dans une position de travail ;
- la **figure 4** représente, en vue de côté, la machine agricole combinée placée en position repliée de transport ;
- la **figure 5** représente la machine agricole de la figure 1 dans la configuration de travail ;
- la figure 6 représente une vue de dessus, à une plus grande échelle, de la figure 5.

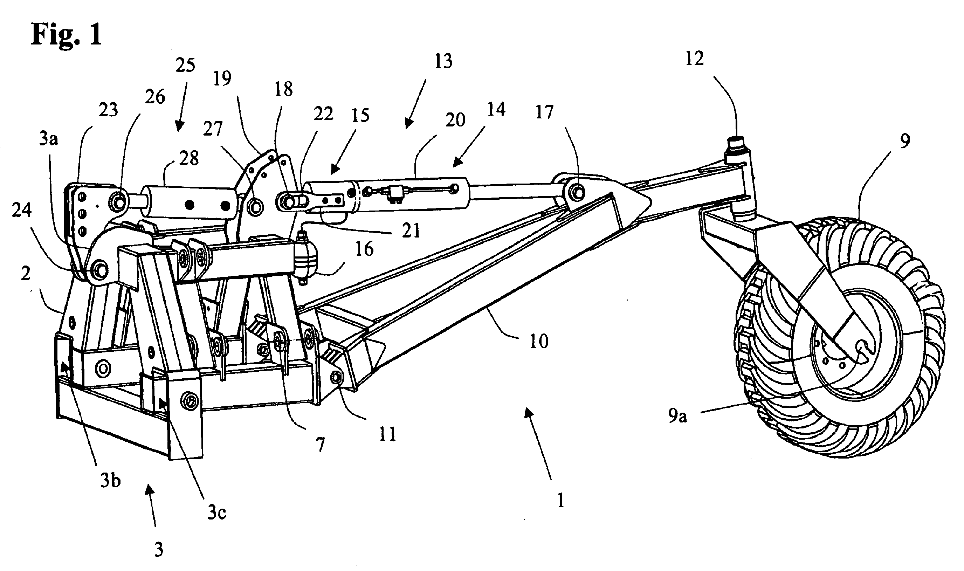

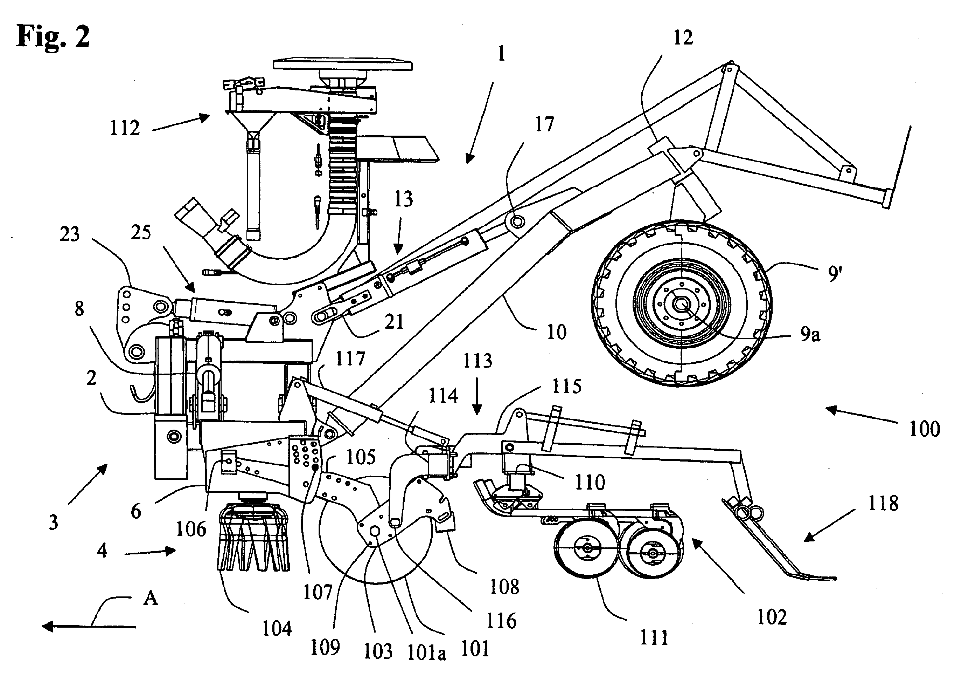

La machine agricole (1), conforme à la présente invention, représentée sur les figures, est destinée à être attelée à un tracteur (non représenté) lors du transport et lors du travail. La figure 1 représente un premier exemple de réalisation d'une partie d'une machine agricole (1) comportant un cadre (2) pourvu d'un système d'attelage trois points (3). Il s'agit d'une machine agricole du type portée. Ce système d'attelage trois points (3) est connu de l'homme de l'art, il permet d'accrocher une machine agricole (1) au relevage arrière d'un tracteur. A cet effet, des chapes ou autres dispositifs d'attelage peuvent être prévus. Seule la chape supérieure (3a) a été représentée sur la figure 1. Les deux chapes inférieures n'apparaissent pas sur les figures mais leurs logements (3b, 3c) respectifs sont indiqué. Il est prévu d'insérer des chapes dans les logements (3b, 3c) pour pouvoir atteler la machine agricole au tracteur. Les deux points d'attelage inférieurs forment un troisième axe d'articulation. Grâce à cet attelage (3), le tracteur est en mesure d'animer la machine agricole (1) selon la direction et un sens d'avance indiquée par la flèche (A) sur la figure 2.

Dans la suite de la description, les notions suivantes "avant", "arrière", "devant" et "derrière" sont définies par rapport au sens d'avance (A) indiqué par la flèche de la direction d'avance (A) et les notions "droite" et "gauche" sont définies en regardant la machine agricole (1), de l'arrière, dans le sens d'avance (A).

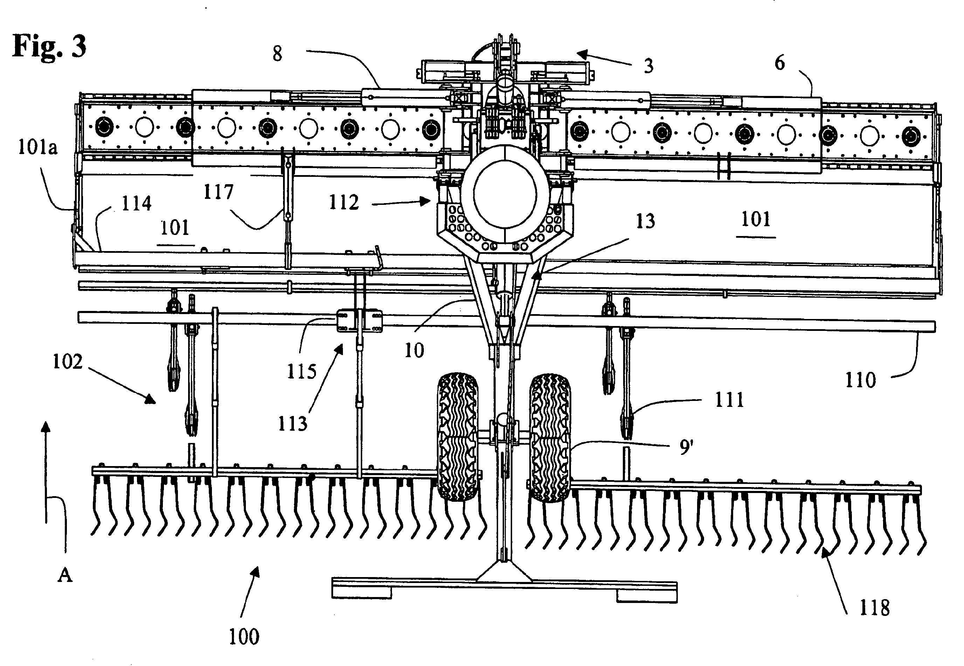

Dans la suite, la machine agricole (1) conforme à l'invention est une machine de grande largeur comme visible sur la figure 3, elle comporte une largeur de travail supérieure à la largeur maximale autorisée pour circuler sur les routes. Pour respecter la législation en vigueur, ladite machine agricole (1) est donc repliable. Elle comporte ainsi plusieurs parties et d'une manière préférentielle deux parties strictement identiques destinées à recevoir des unités de travail (4). Ces deux parties sont reliées audit cadre (2). Les parties correspondent dans l'exemple de réalisation représenté sur les figures 2 et 3 à des châssis (6).

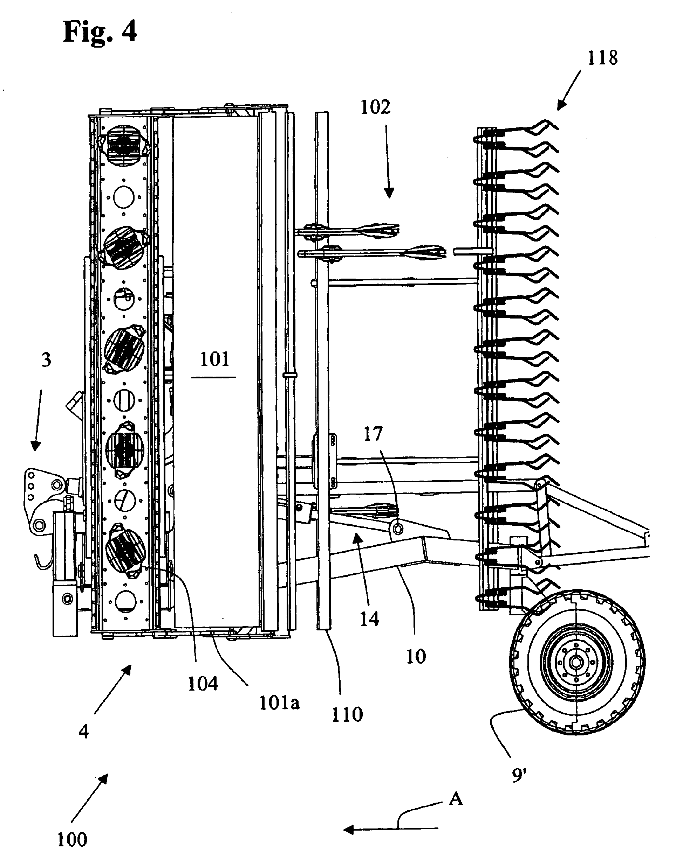

Les deux châssis (6) sont reliés audit cadre (2) via des premières articulations (7) respectives d'axes dirigés selon le sens d'avancement (A). Ils sont disposés de part et d'autre dudit cadre (2) et de manière perpendiculaire à la direction d'avance (A). C'est ainsi que ces deux châssis (6) sont repliables vers le haut pour le transport sur routes (figure 4). La position repliée ou la position de transport est obtenue à l'aide de vérins hydrauliques de repliage (8) articulés chacun entre ledit cadre (2) et ledit châssis (6) correspondant.

Lors du déplacement de la ferme au champ, il est souvent nécessaire de transporter une telle machine agricole de grande largeur sur la route. Afin de respecter les réglementations routières en vigueur, la structure porteuse (1) est dotée d'au moins une roue (9). Par conséquent, la machine agricole est du type semi-portée au transport. La condition de circulation sur la voie publique de cette machine agricole (1) concernant la charge maximale admissible pour l'essieu arrière du tracteur est donc respectée. D'après la figure 3 représentant la machine agricole (1) en vue de dessus, la roue (9) est disposée au centre de la machine, dans le prolongement dudit cadre (2) et du tracteur. La figure 1 représente une partie de la machine agricole (1) avec sa roue (9) dans la position de transport.

La figure 4 représente une machine agricole dans la configuration de transport. Ladite roue (9) se déplace sur le sol et pivote autour d'un axe de rotation (9a) sensiblement horizontal et sensiblement perpendiculaire à la direction d'avance (A). Cette roue (9) est avantageusement disposée à l'arrière de la machine agricole (1). Afin de réduire la longueur de la machine agricole, la roue (9) est située au plus près dudit cadre (2). Cette distance sera adaptée en fonction de l'unité de travail (4) montée sur machine agricole (1).

Selon une caractéristique importante de la présente invention, la roue (9) est liée au cadre (2) au moyen d'une structure porteuse (10). Ladite structure porteuse (10) est reliée audit cadre (2) au moyen de deuxièmes articulations (11) d'axe sensiblement horizontal et sensiblement perpendiculaire à la direction d'avance (A). La direction de ladite deuxième articulation (11) est donc horizontale et orthogonal à la direction de ladite première articulation (7). Cette roue (9) est reliée à ladite structure porteuse (10) via une cinquième articulation (12) d'axe sensiblement vertical au transport. Ladite cinquième articulation (12) permet à la roue (9) de suivre les mouvements du tracteur lors d'un déplacement. Ladite cinquième articulation (12) se trouve devant l'axe de rotation (9a) compte tenu de la direction d'avance (A). Cette roue (9) est une roue d'assistance au transport. Elle permet de supporter une partie du poids de la machine agricole (1) dans la configuration de transport. Ladite roue (9) est avantageusement équipée d'un système de freinage permettant d'assister le système de freinage du tracteur lors du transport.

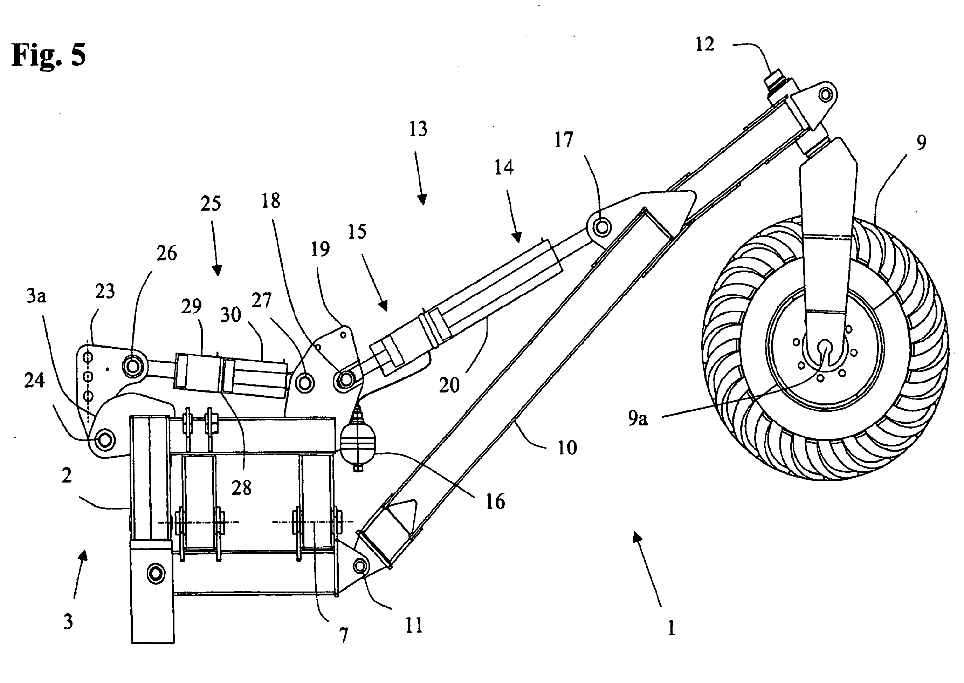

Lorsque la machine agricole (1) est dans sa configuration de travail, d'après les figures 2 et 5, ladite roue (9) ne roule pas au sol, elle est dans une position relevée. La roue (9) est alors disposée sensiblement au-dessus des unités de travail (4) et à une certaine distance de ces derniers. L'encombrement au travail de la machine agricole (1), selon la direction d'avance (A), n'est pas augmentée. La roue (9) ne reposant pas au sol dans la configuration de travail, elle ne laisse pas de traces et ne tasse pas le sol.

Ces différentes positions (travail, transport) sont obtenues par l'intermédiaire d'un premier module hydraulique (13) articulé entre ladite structure porteuse (10) et ledit cadre (2). Ce premier module hydraulique (13) est composé d'un vérin hydraulique à double effet (14) et d'un vérin hydraulique à simple effet (15). Le vérin hydraulique à double effet (14) permet d'abaisser ou de lever la roue (9) afin d'être dans la configuration de transport ou de travail. Le vérin hydraulique à simple effet (15) est, pour sa part, essentiellement actif lors du transport, étant relié à un accumulateur oléopneumatique (16), il permet avantageusement l'amortissement de la machine agricole (1) lors du transport. Ce vérin hydraulique à simple effet (15) avec l'accumulateur oléopneumatique (16) permet d'absorber une grande partie des chocs subis par la roue (9) lors du transport.

Le premier module hydraulique (13) est lié audit structure porteuse (10) via une sixième articulation (17) d'axe horizontal et perpendiculaire à la direction d'avance (A). L'autre extrémité est liée audit cadre (2) via une septième articulation (18) d'axe horizontal et perpendiculaire à la direction d'avance (A). Cette extrémité est avantageusement liée à une chape (19) appartenant audit cadre (2). Cette chape (19) est placée à l'arrière dudit cadre (2). Par ailleurs, ladite chape (19) est située sensiblement au milieu des deuxièmes articulations (11) de la structure porteuse (10) et à une certaine distance au-dessus desdites deuxièmes articulations (11). La septième articulation (18) et les deuxièmes articulations (11) sont placées de telle manière à être sensiblement alignés avec les points d'attelage du système d'attelage trois points (3).

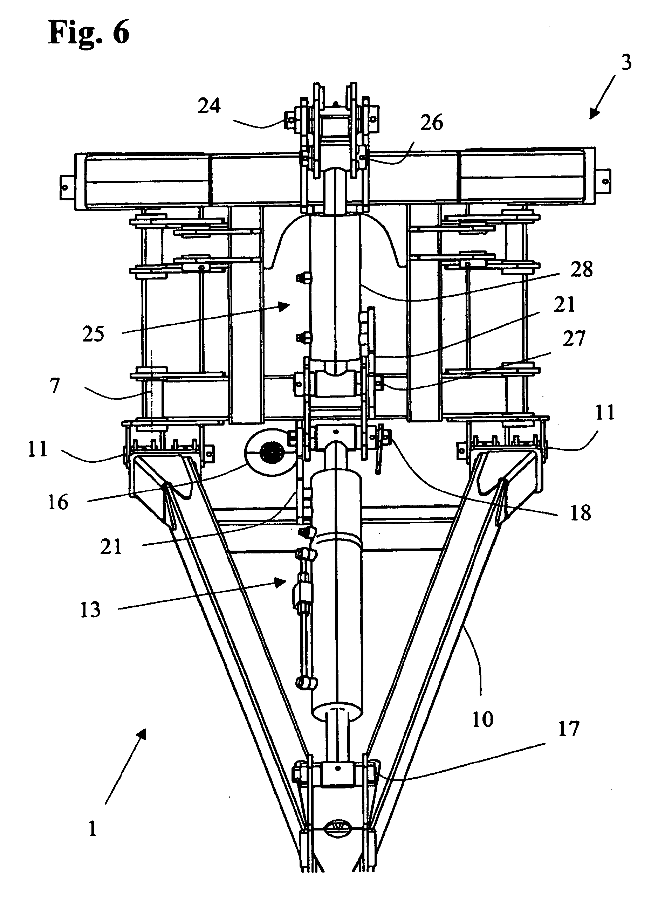

A la lumière de la figure 6, les deux vérins (14, 15) formant le premier module hydraulique (13) comportent un corps commun (20). Celui-ci est bloqué en rotation au moyen d'une pièce (21). Cette pièce (21) est vissée sur ledit corps commun (20) et plus particulièrement sur la partie du corps (20) formant le vérin hydraulique à simple effet (15). L'autre extrémité de la pièce (21) est dotée d'un trou oblong (22). Ledit trou oblong (22) est lié à ladite chape (19) au moyen de la septième articulation (18). La longueur du trou oblong (22) est sensiblement supérieure à la course du vérin hydraulique à simple effet (15) afin de permettre l'amortissement de la machine agricole (1) au transport. La course du vérin hydraulique à double effet (14) est supérieure à la course du vérin hydraulique à simple effet (15).

Selon une autre caractéristique importante de l'invention, le système d'attelage trois points (3) dispose d'une tête d'attelage (23) pivotante. Cette tête d'attelage (23) est avantageusement liée à la chape (3a) via une quatrième articulation (24) d'axe sensiblement horizontal et sensiblement transversal à la direction d'avance (A). La tête d'attelage (23) peut ainsi pivoter vers l'avant ou vers l'arrière autour de la quatrième articulation (24). Cette tête d'attelage (23) est destinée à être liée à la bielle du troisième point (non représentée) du tracteur. Sur la partie avant de la tête d'attelage (23) est ménagée une série de trous, ces trous permettent une adaptation de la machine agricole (1) à différentes catégories d'attelage. Ces différents trous sont alignés sur une même droite. On définit une position médiane de la tête d'attelage (23) lorsque le plan fictif, passant par les différents trous ou la droite, est confondu avec un plan vertical.

Lorsque la bielle du troisième point du tracteur est attelée à la tête d'attelage (23), le pivotement de celle-ci est limité. Par contre la machine agricole (1) est plus ou moins libre de s'orienter autour du troisième axe formé par les deux points d'attelage inférieurs. Il est connu de modifier la longueur de la bielle du troisième point pour augmenter ou réduire l'angle de piquage des unités de travail (4) dans la configuration de travail.

Selon un autre exemple de réalisation non représenté, la bielle du troisième point est remplacée par un vérin hydraulique. L'utilisateur sera ainsi en mesure de modifier la longueur du vérin à partir de la cabine du tracteur.

Ladite machine agricole (1) de la présente invention se comporte comme une machine portée dans la configuration de travail. Il est ainsi nécessaire de bloquer le pivotement de la machine agricole (1) afin de suivre les dénivellations du terrain et d'assurer une profondeur de travail constante. D'une manière particulièrement avantageuse, ce pivotement autour de ladite quatrième articulation (24) est bloqué par un deuxième module hydraulique (25). Ce dernier est articulé entre la tête d'attelage (23) et la chape (19) via une huitième et une neuvième articulation (26, 27). On remarquera que les différentes articulations (7, 11, 12, 17, 18, 24, 26, 27) sont des articulations du type pivot. Par ailleurs lors du transport, il est important que ce deuxième module hydraulique (25) soit libre. Ainsi lorsque le tracteur avec la machine agricole passe des bosses et des creux, les sollicitations au niveau de la bielle du troisième point sont nulles et la machine (1) peut pivoter librement autour dudit troisième axe.

Ledit deuxième module hydraulique (25) est constitué d'un corps commun (28), d'une première et d'une deuxième tige. La première tige forme avec le corps commun (28), un premier vérin (29) et la deuxième tige forme avec le corps commun (28) un deuxième vérin (30). Chaque vérin (29, 30) est avantageusement un vérin hydraulique à simple effet. La course et le volume des chambres des vérins (29, 30) sont différents, néanmoins il n'est pas exclu que ces deux vérins (29, 30) soient identiques. Le corps commun (28) dudit deuxième module hydraulique (25) est bloqué en rotation au moyen de ladite pièce (21).

Ledit deuxième module hydraulique (25) permet avantageusement de retrouver facilement la position médiane de la tête d'attelage (23) c'est à dire lorsque les trous sont confondus avec un plan vertical. Cette position est obtenue lorsque les deux vérins (29, 30) sont alimentés en fluide hydraulique et que les pistons sont en butées. Il serait imaginable de retrouver la position médiane avec des capteurs de position. Durant le travail, les vérins (29, 30) sont constamment alimentés en fluide, ils restent donc en butée ce qui permet de verrouiller le pivotement de la machine agricole (1). Dans la configuration de travail, le vérin (29) est avantageusement allongé alors que le vérin (30) est rétracté. La figure 5, présente la machine agricole (1) avec ladite roue (9) relevée. Sur cette figure, le premier et le deuxième module hydraulique (13, 25) ont été représentés de façon symbolique afin de déduire la position de chaque vérin (14, 15, 29, 30) dans la position de travail.

Ladite machine agricole (1) se comporte comme une machine semi-portée dans la configuration de transport. La machine agricole (1) est attelée au moyen du système d'attelage trois points (3) et ladite roue (9) repose au sol, il est alors nécessaire de libérer la machine agricole (1) pour suivre les dénivellations de la route. Ainsi, on évite de soumettre la bielle du troisième point à des efforts important pouvant aller jusqu'à la rupture lors du passage de bosses. Pour cela, les vérins (29, 30) ne sont pas alimentés durant le transport, ils sont donc libres de s'allonger ou de se rétracter en fonction de la route.

Les différents vérins (14, 15, 29, 30) sont branchés via des conduites respectives formant un circuit hydraulique. Ledit circuit hydraulique est lié à la centrale hydraulique du tracteur. Ce circuit hydraulique permet entre autres de gérer les différentes séquences pour le passage de la configuration de travail à la configuration de transport et inversement.

La mise en position de transport de la machine agricole (1) se fait en trois phases, tout d'abord les deux châssis (6) sont repliés autour des premières articulations (7) au moyen du vérin de repliage (8) correspondant. Puis la roue (9) vient se positionner au sol par l'intermédiaire du premier module hydraulique (13), c'est le vérin hydraulique à double effet (14) qui s'allonge. Et enfin la tête d'attelage (23) est déverrouillée c'est à dire que les tiges des vérins (29, 30) sont libres. Les différentes phases se déroulent de manière automatique à partir de la commande du vérin de repliage (8).

Le passage de la position transport à la position de travail, c'est à dire le dépliage de la machine agricole (1) se fait selon l'ordre inverse c'est à dire : la tête d'attelage (23) est verrouillée en alimentant le deuxième module hydraulique (25) puis le vérin hydraulique à double effet (14) se rétracte entraînant le retrait de la roue (9) et enfin les vérins de repliage (8) s'allongent pour déplier les châssis respectifs (6).

Selon un exemple de réalisation représenté sur les figures 2 à 4, la machine agricole (1) est avantageusement une machine agricole combinée pour le travail du sol et le semis (100). Chaque châssis (6) est ainsi pourvu d'unités de travail (4) composé d'organes de travail du sol et d'un organe de référence (101) associé. A l'arrière de l'organe de référence (101) se trouve une barre de semis (102) reliée audit châssis (6) correspondant à l'aide d'une structure de liaison (103).

La figure 2 représente, en vue de côté, la machine agricole combinée (100) conforme à l'invention dans une position de travail. Chaque châssis (6) est constitué par une poutre de herse rotative et les organes de travail du sol sont des outils de herse rotative (104) entraînés en rotation autour d'axes verticaux. Un carter monté sur ledit cadre (2) permet de transmettre à chaque châssis (6) le mouvement de rotation issu de la prise de force du tracteur. Cette transmission est obtenue à l'aide d'un arbre de transmission respectif. Un tel entraînement est connu en soi.

Chaque organe de référence (101), par exemple constitué d'un rouleau de rappuyage, est monté sur le châssis (6) correspondant à l'aide d'un bras (105). Ce dernier est articulé sur ledit châssis (6) autour d'une articulation (106) localisée de part et d'autre de l'organe de référence (101). L'articulation (106) présente un axe transversal à la direction d'avance (A). C'est ce bras (105) qui supporte l'axe de rotation (101a) dudit organe de référence (101) et qui permet de définir la position de celui-ci par rapport au châssis (6) correspondant. A cet effet, ledit châssis (6) est pourvu d'un moyen d'arrêt (107) contre lequel le bras (105) vient en appui lorsque l'organe de référence (101) roule sur le sol. Le moyen d'arrêt (107) est de préférence déplaçable dans différentes positions et est réalisé avec tous moyens connus.

Ainsi, lorsque l'utilisateur abaisse la machine agricole combinée (100) avec le relevage du tracteur, chaque organe de référence (101) définit la profondeur de travail, c'est-à-dire la pénétration dans le sol des outils (104) correspondants. Un tel mécanisme de réglage est déjà connu.

Le bras (105) comporte également un support (108) comportant des moyens de nettoyage de l'organe de référence (101). Dans l'exemple représenté dans les figures, il s'agit d'un décrotteur du rouleau de rappuyage. Le support (108) est par exemple fixé sur le bras (105) avec tout moyen connu, par exemple des vis (109).

Chaque barre de semis (102) est constituée d'une traverse (110) s'étendant transversalement à la direction d'avance (A). La traverse (110) supporte des socs de semis (111), lesquels sont reliés par l'intermédiaire de conduits (pas représentés) à une tête de distribution (112), partiellement représentée, d'un semoir pneumatique. La tête de distribution (112) permet de répartir les graines à semer dans chaque conduit et soc de semis (111) correspondants. La tête de distribution (112) est bien sûr alimentée de façon connue par un tuyau en communication avec une trémie (non représentée dans les figures) montée par exemple sur un relevage frontal du tracteur.

Chaque barre de semis (102) est liée au châssis (6) correspondant par l'intermédiaire d'une structure de liaison (113) autorisant à ladite barre de semis (102) de se déplacer en hauteur par rapport audit châssis (6) et par rapport à l'organe de référence (101) correspondant. La structure de liaison (113) est formée par une poutre (114) équipée de dispositifs de maintien (115) des traverses (110). La barre de semis (102) étant en deux parties, chacune est montée sur une poutre correspondante (114). Lesdites poutres (114) sont liées auxdits bras (105) liant l'organe de référence (101) audit châssis (6) au moyen d'articulations (116). La position de chaque poutre (114) est réglable autour desdites articulations (116) au moyen d'un vérin hydraulique de position (117). Les dispositifs de maintien (115) sont fixés d'une part sur la poutre (114) et d'autre part sur la traverse (110). Ainsi les socs de semis (111) avec leur traverse respective (110) peuvent être mis ou retirés de leur position de travail par l'intermédiaire des vérins hydrauliques de position (117) articulés entre ledit châssis respectif (6) et ledit dispositif de maintien respectif (115).

Les socs de semis (111) montés sur les traverses (110) ne sont pas représentés dans leur intégralité afin de ne pas surcharger inutilement les figures. Les dispositifs de maintien (115) servent également de support à une herse de recouvrement (118) correspondante destinée à suivre les socs de semis (111). Des moyens de montage et de réglage appropriés pour chaque herse de recouvrement (118) peuvent également être prévus. Selon un autre mode de réalisation de la machine agricole combinée (100) conforme à l'invention, le semoir pneumatique est remplacé par un semoir mécanique.

La machine agricole combinée (100), selon un exemple de réalisation conforme à l'invention, comporte également un moyen de commande servant à relever et à abaisser une barre de semis (102) par rapport à l'organe de référence (101) correspondant. Le soulèvement de ladite barre de semis (102) par rapport audit organe de référence (101) peut être intéressant lors de manoeuvres en bout de parcelle ou pour effectuer uniquement une opération de travail du sol (sans semis) avec la machine agricole combinée (100). Ceci peut s'avérer utile pour des préparations spécifiques d'un lit de semence.

La machine agricole combinée (100) présente également un moyen de retenu pour les deux parties repliables verticalement pour le transport sur routes. De tels mouvements relatifs entre ladite barre de semis (102) et le châssis (6) correspondant généreraient en effet, lors du transport, des chocs nuisibles, à termes, pour les diverses articulations et pour la stabilité de la machine agricole combinée (100).

Le soulèvement de chaque barre de semis (102) par rapport à l'organe de référence (101) correspondant permet à l'utilisateur certes d'effectuer les manoeuvres en bout de parcelles, mais également d'effectuer exclusivement une opération de travail du sol.

Par ailleurs, un tel soulèvement d'une barre de semis (102) ne permet pas le repliage vertical des deux châssis (6) dans la mesure où on réduit ainsi l'espace entre les châssis (6) et ainsi la roue (9) ne peut pas pivoter librement. Chaque barre de semis (102) doit être dans sa position de travail lors du repliage de la machine agricole (100).

Selon l'exemple de réalisation représenté sur les figures 2 à 4, la machine agricole (1) est soutenue par une roue double (9'). D'une manière particulièrement avantageusement, cette roue double (9') est équipée d'un système de freinage intégré permettant une assistance lors du transport. Une machine agricole (1) pourvue d'une telle roue double (9') est plus stable lors des manoeuvres.

Dans un exemple de réalisation non représenté aux figures, il est tout à fait possible que la machine agricole (1) conforme à l'invention soit une machine de récolte des fourrages. Ainsi, l'unité de travail supportée par le châssis est un groupe de fauche. Celui-ci peut être réalisé d'une barre de coupe seule, d'une barre de coupe et d'un dispositif de conditionnement avec ou sans groupeur d'andains. Les roues (9, 9') étant disposées au-dessus de la machine lors du travail et des opérations de coupe et/ou d'assemblage du fourrage ne détériorent pas la qualité du fourrage.

Il est bien évident que l'invention n'est pas limitée aux modes de réalisation décrits et représentés sur les dessins annexés. Des modifications restent possibles, notamment en ce qui concerne la constitution des divers éléments ou par substitution d'équivalents techniques, sans pour autant sortir du domaine de protection tel qu'il est défini dans les revendications.

## Revendications

1. Machine agricole (1 ; 100) comprenant :
- un cadre (2) destiné à être accroché à un tracteur au moyen d'un système d'attelage trois points (3) comportant deux points d'attelage inférieurs et un point d'attelage supérieur ;
- au moins deux châssis (6) reliés audit cadre (2) de manière repliable autour d'une première articulation (7) respective ;
- au moins une unité de travail (4) montée sur chacun desdits châssis (6) ;
***caractérisée en ce* qu'**une structure porteuse (10) supporte au moins une roue (9) et est liée audit cadre (2) via une deuxième articulation (11), le pivotement de ladite structure porteuse (10) autour de ladite deuxième articulation (11) étant commandé par un premier module hydraulique (13) permettant d'abaisser pour le transport et de dégager du sol la roue (9) pour le travail et qu'au transport ladite machine agricole (1 ; 100) pivote librement autour d'un troisième axe formé par lesdits deux points d'attelage inférieurs, ledit pivotement étant limité par un deuxième module hydraulique (25) relié audit point d'attelage supérieur.

2. Machine agricole selon la revendication 1, ***caractérisée en ce* que** ledit cadre (2) comporte une tête d'attelage (23) pivotante définissant le point d'attelage supérieur.

3. Machine agricole selon la revendication 2, ***caractérisée en ce* que** ladite tête d'attelage (23) pivote autour d'une quatrième articulation (24) sensiblement parallèle audit troisième axe formé par les deux points d'attelage inférieurs.

4. Machine agricole selon la revendication 2 ou 3, ***caractérisée en ce* que** ledit deuxième module hydraulique (25) est articulé entre ladite tête d'attelage (23) et ledit cadre (2).

5. Machine agricole selon l'une quelconque des revendications 2 à 4, ***caractérisée en ce* que** le pivotement de ladite tête d'attelage (23) est bloqué par ledit deuxième module hydraulique (25) au travail.

6. Machine agricole selon l'une quelconque des revendications 2 à 5, ***caractérisée en ce* que** la position médiane de la tête d'attelage (23) est définie grâce audit deuxième module hydraulique (25).

7. Machine agricole selon l'une quelconque des revendications 1 à 6, ***caractérisée en ce* que** ledit deuxième module hydraulique (25) est composé de deux vérins (29, 30).

8. Machine agricole selon l'une quelconque des revendications 1 à 7, ***caractérisée en ce* que** ledit premier module hydraulique (13) comporte deux vérins (14, 15).

9. Machine agricole selon la revendication 7 et 8, ***caractérisée en ce* que** lesdits vérins (14, 15) dudit premier module hydraulique (13) comportent un corps commun (20) et que lesdits vérins (29, 30) dudit deuxième module hydraulique (25) comportent aussi un corps commun (28).

10. Machine agricole selon la revendication 9, ***caractérisée en ce* que** l'un des vérins (14 ; 15) dudit premier module hydraulique (13) est relié à un accumulateur oléopneumatique (16).

11. Machine agricole selon l'une quelconque des revendications 1 à 10, ***caractérisée en ce* que** ladite première articulation (7) comporte un axe dirigé sensiblement dans la direction d'avance (A) et ladite deuxième articulation (11) comporte un axe sensiblement horizontal et orthogonal à ladite première articulation (7).

12. Machine agricole selon l'une quelconque des revendications 1 à 11, ***caractérisée en ce* que** ladite(lesdites) roue(s) (9) est(sont) pivotante autour d'une cinquième articulation (12).

13. Machine agricole selon l'une quelconque des revendications 1 à 12, ***caractérisée en ce* que** ladite cinquième articulation (12) se trouve devant l'axe de rotation (9a) de ladite(lesdites) roue(s) (9).

14. Machine agricole selon l'une quelconque des revendications 1 à 13, ***caractérisée en ce* que** ladite cinquième articulation (12) est sensiblement verticale au transport.

15. Machine agricole selon l'une quelconque des revendications 1 à 14, ***caractérisée en ce* que** ladite(lesdites) roue(s) (9) permet(tent) l'assistance au freinage pour le transport sur route.

16. Machine agricole selon l'une quelconque des revendications 1 à 15 ***caractérisée en ce* que** la roue (9) est une roue double (9').

17. Machine agricole selon la revendication 1 à 16, ***caractérisée en ce* que** le passage de la position de travail à la position de transport et inversement est géré de manière séquentielle.

## Patentansprüche

1. Landmaschine (1; 100) mit:
- einem Rahmen (2), der dazu bestimmt ist mittels einer Dreipunktkupplung (3), die zwei untere Kupplungspunkte und einen oberen Kupplungspunkt aufweist, an einen Traktor angekuppelt zu werden;
- mindestens zwei Gestellen (6), die mit dem Rahmen (2) verbunden sind, sodass sie um ein erstes jeweiliges Gelenk (7) klappbar sind;
- mindestens einer an jedem der Gestelle (6) befestigte Arbeitseinheit (4); ***dadurch gekennzeichnet, dass*** ein Traggestell (10) mindestens ein Rad (9) trägt und über ein zweites Gelenk (11) mit dem Rahmen (2) verbunden ist, wobei die Schwenkbewegung des Traggestells (10) um das zweite Gelenk (11) über ein erstes Hydraulikmodul (13) gesteuert wird, dass das Absenken des Rads (9) für den Transport und sein Anheben vom Boden für den Betrieb gestattet, und dass die Landmaschine (1; 100) frei um eine dritte Achse schwenkt, die von den beiden unteren Kupplungspunkten gebildet wird, wobei die Schwenkbewegung von einem zweiten, mit dem oberen Kupplungspunkt verbundenen Hydraulikmodul (25) begrenzt ist.

2. Landmaschine nach Anspruch 1, ***dadurch gekennzeichnet, dass*** der Rahmen (2) einen schwenkbaren Kupplungskopf aufweist (23), der den oberen Kupplungspunkt definiert.

3. Landmaschine nach Anspruch 2, ***dadurch gekennzeichnet, dass*** der Kupplungskopf (23) um ein viertes zur dritten Achse, die durch die beiden unteren Kupplungspunkte gebildet ist, im wesentlichen paralleles Gelenk (24) schwenkt.

4. Landmaschine nach Anspruch 2 oder 3, ***dadurch gekennzeichnet, dass*** das zweite Hydraulikmodul (25) zwischen dem Kupplungskopf (23) und dem Rahmen (2) angelenkt ist.

5. Landmaschine nach irgend einem der Ansprüche 2 bis 4, ***dadurch gekennzeichnet, dass*** die Schwenkbewegung des Kupplungskopfes (23) bei der Arbeit durch das zweite Hydraulikmodul (25) blockiert ist.

6. Landmaschine nach irgend einem der Ansprüche 2 bis 5, ***dadurch gekennzeichnet, dass*** die Mittelstellung des Kupplungskopfes (23) durch das zweite Hydraulikmodul (25) definiert ist.

7. Landmaschine nach irgend einem der Ansprüche 1 bis 6, ***dadurch gekennzeichnet, dass*** das zweite Hydraulikmodul (25) aus den beiden Zylindern (29, 30) besteht.

8. Landmaschine nach irgend einem der Ansprüche 1 bis 7, ***dadurch gekennzeichnet, dass*** das erste Hydraulikmodul (13) zwei Zylinder (14, 15) aufweist.

9. Landmaschine nach Anspruch 7 und 8, ***dadurch gekennzeichnet, dass*** die Zylinder (14, 15) des ersten Hydraulikmoduls (13) ein gemeinsamer Körper (20) aufweisen und dass die Zylinder (29, 30) des zweiten Hydraulikmoduls (25) ebenfalls ein gemeinsamer Körper (28) aufweisen.

10. Landmaschine nach Anspruch 9, ***dadurch gekennzeichnet, dass*** einer der Zylinder (14; 15) des ersten Hydraulikmoduls (13) mit einem ÖlDruckluftspeicher (16) verbunden ist.

11. Landmaschine nach irgend einem der Ansprüche 1 bis 10, ***dadurch gekennzeichnet, dass*** das erste Gelenk (7) eine im wesentlichen in Fahrtrichtung (A) verlaufende Achse aufweist und das zweite Gelenk (11) eine im wesentlichen zum ersten Gelenk (7) horizontale und orthogonale Achse aufweist.

12. Landmaschine nach irgend einem der Ansprüche 1 bis 11, ***dadurch gekennzeichnet, dass*** das Rad (die Räder) (9) um ein fünftes Gelenk (12) schwenkbar ist (sind).

13. Landmaschine nach irgend einem der Ansprüche 1 bis 12, ***dadurch gekennzeichnet, dass*** das fünfte Gelenk (12) sich vor der Drehachse (9a) des Rades (der Räder) (9) befindet.

14. Landmaschine nach irgend einem der Ansprüche 1 bis 13, ***dadurch gekennzeichnet, dass*** das fünfte Gelenk (12) beim Transport im wesentlichen vertikal ist.

15. Landmaschine nach irgend einem der Ansprüche 1 bis 14, ***dadurch gekennzeichnet, dass*** das Rad (die Räder) (9) beim Straßentransport eine Bremsunterstützung ermöglicht (ermöglichen).

16. Landmaschine nach irgend einem der Ansprüche 1 bis 15, ***dadurch gekennzeichnet, dass*** das Rad (9) ein Doppelrad (9') ist.

17. Landmaschine nach Anspruch 1 bis 16, ***dadurch gekennzeichnet, dass*** der Übergang von der Arbeitsstellung in die Transportstellung und umgekehrt stufenweise erfolgt.

## Claims

1. Agricultural machine (1; 100) comprising:
- a frame (2) intended to be hitched to a tractor by means of a three-point coupling device (3) including two lower hitching points and one upper hitching point;
- at least two chassis (6) connected to the said frame (2) in a foldable manner around a first respective articulation (7);
- at least one work unit (4) mounted on each of the said chassis (6);
***characterized in that*** a carrying structure (10) supports at least one wheel (9) and is connected to the said frame (2) via a second articulation (11), the pivoting of the said carrying structure (10) around the said second articulation (11) being controlled by a first hydraulic module (13) making it possible to lower for transport and clear from the ground the wheel (9) for work, and **in that** during transport, the said agricultural machine (1; 100) pivots freely around a third axis formed by the said two lower hitching points, the said pivoting being restricted by a second hydraulic module (25) connected to the said upper hitching point.

2. Agricultural machine according to claim 1, ***characterized in that*** the said frame (2) includes a pivoting coupling head (23) defining the upper hitching point.

3. Agricultural machine according to claim 2, ***characterized in that*** the said coupling head (23) pivots around a fourth articulation (24) substantially parallel to the said third axis formed by the two lower hitching points.

4. Agricultural machine according to claim 2 or 3, ***characterized in that*** the said second hydraulic module (25) is articulated between the said coupling head (23) and the said frame (2).

5. Agricultural machine according to any one of claims 2 to 4, ***characterized in that*** the pivoting of the said coupling head (23) is locked by the said second hydraulic module (25) during work.

6. Agricultural machine according to any one of claims 2 to 5, ***characterized in that*** the median position of the coupling head (23) is defined using the said second hydraulic module (25).

7. Agricultural machine according to any one of claims 1 to 6, ***characterized in that*** the said second hydraulic module (25) consists of two jacks (29, 30).

8. Agricultural machine according to any one of claims 1 to 7, ***characterized in that*** the said first hydraulic module (13) includes two jacks (14, 15).

9. Agricultural machine according to claims 7 and 8, ***characterized in that*** the said jacks (14, 15) of the said first hydraulic module (13) include a common body (20) and that the said jacks (29, 30) of the said second hydraulic module (25) also include a common body (28).

10. Agricultural machine according to claim 9, ***characterized in that*** one of the jacks (14; 15) of the said first hydraulic module (13) is connected to an oleopneumatic accumulator (16).

11. Agricultural machine according to any one of claims 1 to 10, ***characterized in that*** the said first articulation (7) includes an axis directed substantially in the direction of advance (A) and the said second articulation (11) includes an axis substantially horizontal and orthogonal to the said first articulation (7).

12. Agricultural machine according to any one of claims 1 to 11, ***characterized in that*** the said wheel(s) (9) pivot(s) around a fifth articulation (12).

13. Agricultural machine according to any one of claims 1 to 12, ***characterized in that*** the said fifth articulation (12) is located in front of the axis of rotation (9a) of the said wheel(s) (9).

14. Agricultural machine according to any one of claims 1 to 13, ***characterized in that*** the said fifth articulation (12) is substantially vertical during transport.

15. Agricultural machine according to any one of claims 1 to 14, ***characterized in that*** the said wheel(s) (9) provide(s) assistance with braking for road transport.

16. Agricultural machine according to any one of claims 1 to 15, ***characterized in that*** the wheel (9) is a double wheel (9').

17. Agricultural machine according to claims 1 to 16, ***characterized in that*** the transposition from the work position to the transport position and vice versa is managed sequentially.
